# EUROPÄISCHE PATENTSCHRIFT

(11) **EP 2 190 703 B1**
(45) Veröffentlichungstag und Bekanntmachung des Hinweises auf die Patenterteilung: **20.06.2012**
(21) Anmeldenummer: 08786132.4
(22) Anmeldetag: 14.07.2008
(51) Int. Cl.: B60S 1/38

(54) **WISCHBLATT**
WIPER BLADE
BALAI D'ESSUIE-GLACE

(30) Priorität: 12.09.2007 DE 102007043528
(43) Veröffentlichungstag der Anmeldung: 02.06.2010
(73) Patentinhaber: Robert Bosch GmbH, 70442 Stuttgart (DE)
(72) Erfinder: AZNAG, Mohamed, B-3271 Scherpenheuvel-Zichem (BE)
(86) Internationale Anmeldenummer: PCT/EP2008/059176
(87) Internationale Veröffentlichungsnummer: WO 2009/033854

(56) Entgegenhaltungen:
- WO-A-2005/115813
- WO-A-2007/031260

## Beschreibung

### Stand der Technik

Die Erfindung geht von einem Wischblatt nach dem Oberbegriff des Anspruchs 1 aus.

Aus der DE 10 2004 051 467 A1 ist ein gattungsgemäßes Wischblatt bekannt. Am Ende des Wischblatts ist eine mehrteilige Endkappe vorgesehen, deren Basiselement mittels Führungsprofilen auf den Federschienen geführt ist. Mit dem Basiselement ist ein Deckel gelenkig verbunden, der in montiertem Zustand eine Verschlussposition einnimmt. Mit geöffnetem Deckel ist das Bauteil vom Ende der Wischleiste abnehmbar. Eine verschlissene Wischleiste kann daraufhin gegen eine neue ausgetauscht werden. Nach dem Austausch wird das Basisteil mit geöffnetem Deckel auf das Ende der Wischleiste gefügt, bis Rasthaken mit ihren Rastnasen an der vom Ende des Wischblatts abgewandten Seite der Brücke verrasten. Dadurch ist das Basisteil in Längsrichtung am Ende der Federschienen fixiert. Wird der Deckel, dessen Schwenkachse quer zur Längsrichtung des Wischblatts verläuft, geschlossen, drückt ein Exzentermechanismus, der am Deckel angeformt ist, auf eine Federzunge. Diese ist am Basiselement schwenkbar angeordnet und besitzt an der der Wischleiste zugewandten Seite einen Verriegelungsdorn, dessen Spitze beim Verschließen des Deckels in die Kopfleiste eindringt. Somit ist die Wischleiste über die Endkappe relativ zu den Federschienen fixiert.

Das Basisteil und der Deckel bestehen vorzugsweise aus Kunststoff. Sie werden als Einzelbauteile in einem Spritzgussverfahren hergestellt. Bei einer Ausgestaltung ist die Dornspitze unmittelbar an der der Wischleiste zugewandten Seite des Deckels angeformt und dringt beim Schließen des Deckels von oben in die Kopfleiste der Wischleiste ein. In der geschlossenen Position wird der Deckel gegenüber dem Basiselement verrastet.

Ein gattungsgemäßes Wischblett ist aus dem Dokument WO-A-2005/115 813 bekannt.

### Offenbarung der Erfindung

Nach der Erfindung besitzt das Basiselement in seiner Deckwand eine Rastöffnung, die mit der Brücke bei der Montage verrastet. Dabei kann die Brücke im Wesentlichen bündig mit der Außenkontur der Deckwand abschließen, sodass sich insgesamt ein flaches Konzept für den Wischblattabschluss ergibt. Das Basiselement besitzt außerdem eine seitliche Öffnung, in die der Spitzenhalter eingeführt werden kann und in der Endposition am Basiselement verrastet, wobei die Spitze seitlich in die Wischleiste eindringt. Durch die seitliche Anordnung des Spitzenhalters und der Spitze bleibt die flache Bauhöhe des Wischblattabschlusses erhalten. Gemäß einer Ausgestaltung der Erfindung besitzt der Spitzenhalter einen Führungsblock mit seitlichen Führungsnuten, die zu Führungsstegen am Rande der seitlichen Öffnung passen. Die seitliche Öffnung wie der Führungsblock sind zwangsläufig in Längsrichtung des Wischblatts versetzt zur Brücke angeordnet, sodass durch diese Konstruktionselemente die Bauhöhe des Basiselements nicht beeinflusst wird. Die Endposition des Spitzenhalters wird zweckmäßigerweise durch eine Raste bewirkt, die an dem Führungsblock in Montagerichtung angeformt ist und in montiertem Zustand mit einer Rastkante in eine Rastkerbe an der Innenseite der Deckwand einrastet. Die Anordnung der Rastelemente, nämlich der Rastkante und Rastkerbe, kann vertauscht werden.

Gemäß einer weiteren Ausgestaltung der Erfindung befindet sich auf der Innenseite des Führungsblocks zwischen zwei Führungsnuten ein Einschubfach für ein Spitzenblech, dessen Spitze der Wischleiste zugewandt ist. Dabei ist das Spitzenblech in vorteilhafter Weise durch Rastelemente am Spitzenhalter verrastet. Diese können in einem Rastloch im Boden des Spitzenblechs und einem Rastzapfen am Spitzenhalter bestehen. Grundsätzlich ist es jedoch auch möglich, dass an dem Spitzenblech ein Rastzapfen angeformt ist, der mit einer Vertiefung des Führungsblocks des Spitzenhalters verrastet. Die Spitze des Spitzenblechs ragt ein Stück weit aus den Führungsnuten zur Wischleiste hin vor, wird aber mit einem geringen Abstand durch die Raste zum Fixieren des Führungsblocks am Basiselement abgeschirmt, wodurch die Verletzungsgefahr vor der Montage des Spitzenhalters stark verringert wird. Da die Spitze an einem Spitzenblech aus Stahl angeordnet ist, kann sie stabil und doch sehr flach ausgebildet sein, sodass sie bei der Montage leicht in die Wischleiste eindringt, ohne abzuknicken.

Zum Lösen der Raste, die den Spitzenhalter am Basiselement fixiert, ist am Führungsblock eine Taste angeordnet. Diese kann ein Stück weit aus der seitlichen Öffnung vorstehen, insbesondere wenn das Basiselement und der Spitzenhalter von einer Abdeckkappe überdeckt werden. Die Abdeckkappe ist mit Führungsprofilen auf dem Basiselement geführt und besitzt am Ende eine geschlossene Stirnwand. Dadurch erhält der Wischblattabschluss eine kompakte Außenkontur mit strömungsgünstigen Eigenschaften und guten Designqualitäten. Die Abdeckkappe kann weitgehend je nach Einzelfall an unterschiedliche Gegebenheiten angepasst werden. Zweckmäßigerweise besitzt sie an ihrer Anströmseite ein Windleitprofil und an ihrer offenen Stirnseite ein Anschlussprofil zum Anschluss an einen Spoiler. In diesem Fall kann die Taste zum Lösen des Spitzenhalters im Bereich der höchsten Erhebung des Windleitprofils angeordnet und der Innenkontur der Abdeckkappe angepasst werden, sodass die Außenkontur der Abdeckkappe dadurch nicht gestört wird.

Zum Fixieren der Abdeckkappe auf dem Basiselement sind an den unteren Schenkeln der Führungsprofile der Abdeckkappe Rastelemente in Form von Aussparungen und Vorsprüngen vorgesehen, die bei der Montage miteinander verrasten.

Wenn die Wischleiste verschlissen ist, reicht es in der Regel aus, dass die Wischleiste allein erneuert wird. Es kann sich jedoch auch ergeben, dass der Wischblattabschluss im Laufe der Zeit unansehnlich geworden oder defekt ist. In diesem Fall ist es zweckmäßig, den Wischleistenabschluss als separates Ersatzteil bereitzustellen.

### Kurze Beschreibung der Zeichnungen

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Darstellung eines Endes eines Wischblatts mit einem zu montierenden Basiselement,
- Fig. 2: ein Wischblattende nach Fig. 1 mit montiertem Basiselement,
- Fig. 3: ein Wischblattende nach Fig. 2 mit einem halbmontierten Spitzenhalter,

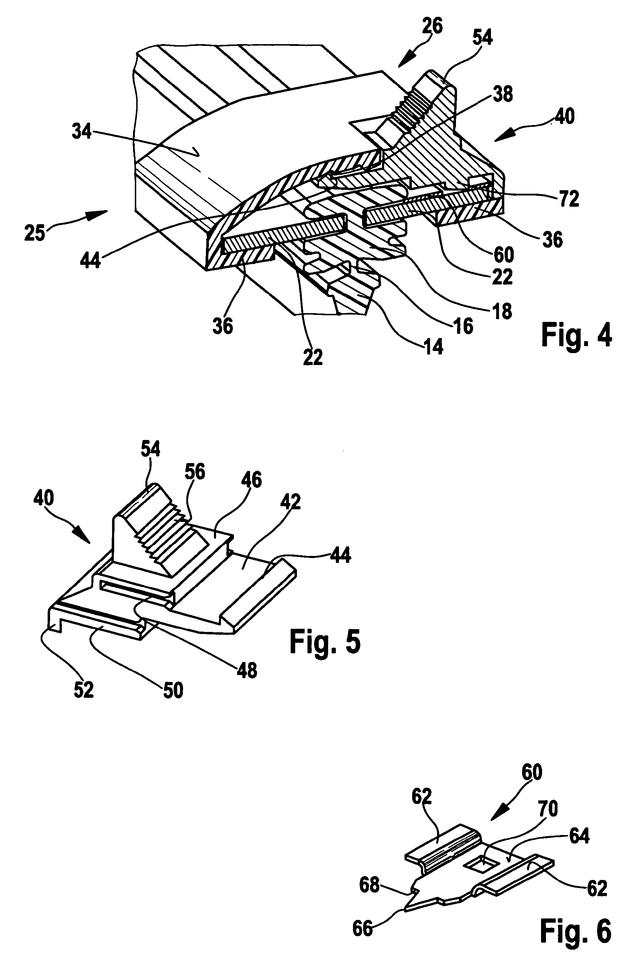

- Fig. 4: einen Schnitt entsprechend der Linie IV-IV in Fig. 3,
- Fig. 5: eine perspektivische Darstellung eines Spitzenhalters,
- Fig. 6: eine perspektivische Darstellung eines Spitzenblechs,

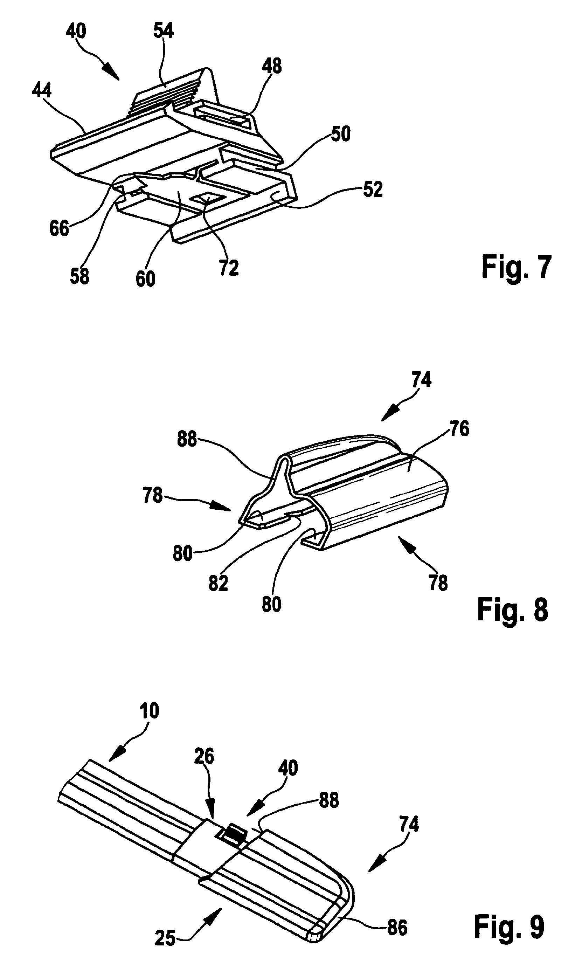

- Fig. 7: einen Spitzenhalter mit einem montierten Spitzenblech,
- Fig. 8: eine perspektivische Darstellung einer Abdeckkappe,
- Fig. 9: ein Wischblattende mit einer halbmontierten Abdeckkappe und

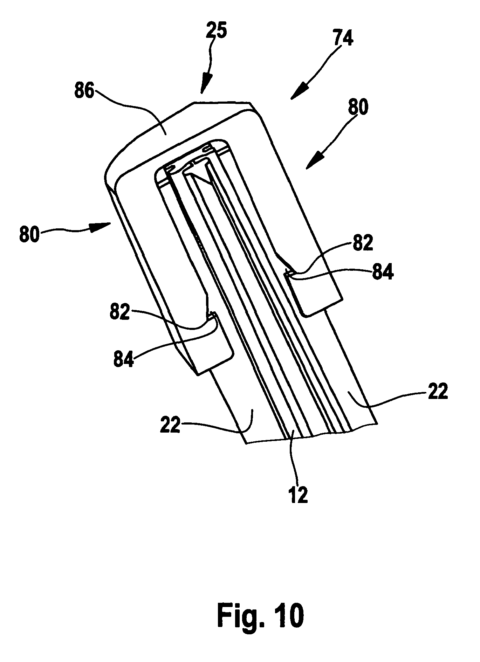

- Fig. 10: ein Wischblattende nach Fig. 9 mit montierter Abdeckkappe von unten.

### Ausführungsformen der Erfindung

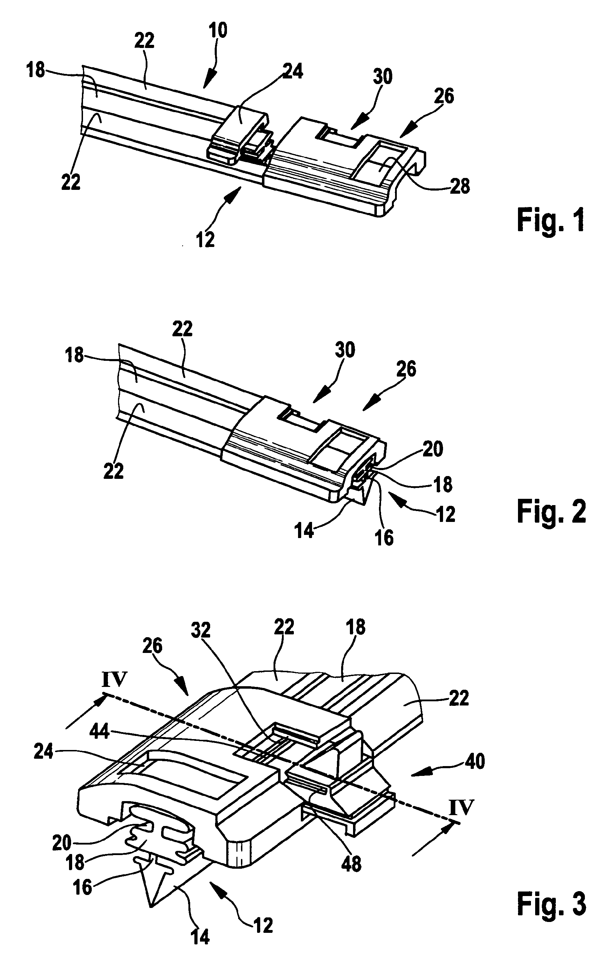

Fig. 1 zeigt das Ende eines Wischblatts 10, das eine Wischleiste 12 und als Tragelement zwei Federschienen 22 besitzt. Diese sind in zwei seitlichen Längsnuten 20 einer Kopfleiste 18 der Wischleiste 12 eingesetzt und an ihren Enden über eine Brücke 24 fest miteinander verbunden. Die Wischleiste 12 besitzt eine Wischlippe 14, die über einen Kippsteg 16 mit der Kopfleiste 18 verbunden ist. Am Ende des Wischblatts 10 ist ein Wischblattabschluss 25 vorgesehen, der ein Basiselement 26 und einen Spitzenhalter 40 umfasst. Das Basiselement 26, das ein flaches Querschnittprofil aufweist, wird vom Ende des Wischblatts 10 her auf die Federschienen 22 aufgeschoben und zwischen Längsflansche 36 und einer Deckwand 34 geführt. In der Deckwand 34 befindet sich eine Rastöffnung 28, die der Kontur der Brücke 24 angepasst ist und die bei der Montage mit der Brücke 24 verrastet. Die Brücke 24 kann in montiertem Zustand im Wesentlichen bündig mit der Außenkontur der Deckwand 34 abschließen, sodass es ein harmonisches Design ergibt.

Außerdem besitzt das Basiselement 26 eine seitliche Öffnung 30, in die der Spitzenhalter 40 eingesetzt wird. Hierzu dienen an den Rändern der Öffnung 30 Führungsschienen 32, die in seitliche Führungsnuten 48 an einem Führungsblock 46 des Spitzenhalters 40 eingreifen. Der Spitzenhalter 40 wird in seiner Endposition durch eine Raste 42 fixiert, die am Führungsblock 46 angeformt ist und mit einer Rastkante 44 in eine Rastkerbe 38 an der Innenseite der Deckwand 34 eingreift. Grundsätzlich ist es auch möglich, dass die Rastkerbe 38 an dem Spitzenhalter 40 und die Rastkante 44 an dem Basiselement 26 angeordnet sind.

An der der Wischlippe 14 zugewandten Seite des Spitzenhalters 40 befindet sich ein Einschubfach für ein Spitzenblech 60. Es wird im Wesentlichen durch zwei in einem Abstand einander gegenüberliegenden Führungsnuten 58 gebildet. Diese nehmen an dem Spitzenblech 60 seitlich angeformte Führungswangen 62 auf. Das Spitzenblech 60 wird in die Führungsnuten 58 so eingesetzt, dass seine Spitze 66 zur Wischleiste 12 weist. Die Spitze 66 wird zum Boden 64 des Spitzenblechs 60 durch Anschlagflächen 68 begrenzt. Das Spitzenblech 60 wird zweckmäßigerweise aus einem Stahlblech in einem Blechbiege- und Stanzverfahren hergestellt, wobei in den Boden 64 ein Rastloch 70 gestanzt wird, das mit einem Rastzapfen 72 zusammenwirkt, der an der dem Spitzenblech 60 zugewandten Seite des Führungsblocks 46 zwischen den Führungsnuten 58 angeordnet ist. Das Stahlblech ermöglicht eine flache, und doch stabile Gestaltung des Spitzenblechs 60, wobei die Spitze 66 als Lanzette geformt sein kann. Wenn das Spitzenblech 60 in dem Spitzenhalter 40 montiert ist, steht seine Spitze 66 ein Stück weit über die Führungsnuten 58 vor, sodass die Spitze 66 bei der Montage oberhalb der Federschienen 22 in einen Längssteg zwischen den Längsnuten 20 der Kopfleiste 18 eindringt. Dadurch wird die Wischleiste 12 über den Wischleistenabschluss 25 relativ zu den Federschienen 22 fixiert. Die zugeordnete Federschiene 22 wird im Bereich des Spitzenhalters 40 an ihrer Längsseite von einer Abschlusswand 52 überdeckt, die an dem Spitzenhalter 40 angeformt ist. Zur besseren Führung des Spitzenhalters 40 befinden sich im Bereich der Abschlusswand 52 Führungsstege 50, die in entsprechende Nuten des Basiselements 26 eingreifen.

Zum Entriegeln des Spitzenhalters 40 besitzt dieser eine Taste 54 mit einer Grifffläche 56. Mit dieser Taste 54 kann die Rastkante 44 aus der Rastkerbe 38 gedrückt werden, sodass der Spitzenhalter 40 entgegen der Montagerichtung aus dem Basiselement 26 geschoben werden kann. Gleichzeitig wird die Spitze 66 des Spitzenblechs 60 aus der Wischleiste 12 entfernt, sodass diese aus dem Zwischenraum zwischen den Federschienen 22 herausgezogen werden kann. Besitzt das Wischblatt 10 einen Spoiler, der nicht dargestellt ist, umfasst der Wischleistenabschluss 25 zweckmäßigerweise eine Abdeckkappe 74, die mit Führungsprofilen 78 auf dem Basiselement 26 geführt ist und mit Rastelementen in Form von Rastkerben 82 in den unteren Schenkeln 80 der Führungsprofile 78 und Rastnocken 84 am Basiselement 26 fixiert ist. Die Abdeckkappe 74 besitzt auf ihrer Anströmseite ein Windleitprofil 76, das dem Windleitprofil des Spoilers angeglichen ist. Ferner ist an der offenen Stirnseite, die einer nach außen gerichteten geschlossenen Stirnwand 86 der Abdeckkappe 74 entgegengesetzt gerichtet ist, ein Anschlussprofil 88 vorgesehen, das einen harmonischen, strömungsgünstigen Übergang zwischen dem Ende des Spoilers und der Abdeckkappe 74 gewährleistet. Im Bereich der höchsten Erhebung des Windleitprofils 76 ist zweckmäßigerweise die Taste 54 angeordnet. Sie wird der Innenkontur der Abdeckkappe 74 so angepasst, dass die Außenkontur, insbesondere das Windleitprofil 76, durch die Taste 54 nicht beeinträchtigt wird.

## Patentansprüche

1. Wischblatt (10) mit einer Wischleiste (12) und zwei als Tragelement dienenden Federschienen (22), die in seitliche Längsnuten (20) der Wischleiste (12) eingesetzt und an ihren Enden durch eine Brücke (24) miteinander fest verbunden sind, wobei am Ende des Wischblatts (10) ein Wischblattabschluss (25) vorgesehen ist, dessen Basiselement (26) auf den Federschienen (22) geführt sowie relativ zu den Federschienen (22) fixiert ist und einen Spitzenhalter (40) aufweist, dessen Spitze (66) in die Wischleiste (12) im montierten Zustand eingreift und die Wischleiste (12) relativ zu den Federschienen (22) fixiert, and das Basiselement (26) in seiner Deckwand (34) eine Rastöffnung (28) aufweist, die mit der Brücke (24) bei der Montage verrastet, **dadurch gekennzeichnet, daß** das Basiselement eine seitliche Öffnung (30) besitzt, in die der Spitzenhalter (40) eingeführt werden kann und in der Endposition am Basiselement (26) verrastet, wobei die Spitze (66) seitlich in die Wischleiste (12) eindringt.

2. Wischblatt (10) nach Anspruch 1, **dadurch gekennzeichnet, dass** der Spitzenhalter (40) einen Führungsblock (46) mit seitlichen Führungsnuten (48) besitzt, die zu Führungsstegen (50) am Rande der seitlichen Öffnung (30) passen.

3. Wischblatt (10) nach Anspruch 2, **dadurch gekennzeichnet, dass** an dem Führungsblock (46) in Montagerichtung eine Raste (42) angeformt ist, die im montierten Zustand mit einer Rastkante (44) in eine Rastkerbe (38) an der Innenseite der Deckwand (34) einrastet.

4. Wischblatt (10) nach einem der Ansprüche 2 oder 3, **dadurch gekennzeichnet, dass** sich auf der Innenseite des Führungsblocks (46) zwischen zwei Führungsnuten (58) ein Einschubfach für ein Spitzenblech (60) befindet, dessen Spitze (66) der Wischleiste (12) zugewandt ist.

5. Wischblatt (10) nach Anspruch 4, **dadurch gekennzeichnet, dass** das Spitzenblech (60) in seinem Boden (64) ein Rastelement (70) aufweist, das mit einem entsprechenden Rastelement (84) am Spitzenhalter (40) verrastet.

6. Wischblatt (10) nach einem der Ansprüche 2 bis 5, **dadurch gekennzeichnet, dass** am Führungsblock (46) eine Taste (54) zum Lösen der Raste (42) angeordnet ist.

7. Wischblatt (10) nach einem der vorhergehenden Ansprüche, **dadurch gekennzeichnet, dass** eine Abdeckkappe (74) das Basiselement (26) und den Spitzenhalter (40) überdeckt, die mit Führungsprofilen (78) auf dem Basiselement (26) geführt ist und am Ende eine geschlossene Stirnwand (86) besitzt.

8. Wischblatt (10) nach Anspruch 7, **dadurch gekennzeichnet, dass** die Abdeckkappe (74) an ihrer Anströmseite ein Windleitprofil (76) und an ihrer offenen Stirnseite ein Anschlussprofil (88) zum Anschluss an einen Spoiler besitzt.

9. Wischblatt (10) nach Anspruch 7, **dadurch gekennzeichnet, dass** die Taste (54) im Bereich der höchsten Erhebung des Windleitprofils (76) angeordnet und der Innenkontur der Abdeckkappe (74) anpasst ist.

10. Wischblatt (10) nach einem der Ansprüche 7 bis 9, **dadurch gekennzeichnet, dass** an den unteren Schenkeln (80) der Führungsprofile (78) Rastelemente (82) vorgesehen sind, die mit Rastelementen (84) an dem Basiselement (26) zusammenwirken.

## Claims

1. A wiper blade (10) with a wiper strip (12) and two spring rails (22) which serve as a supporting element, are inserted into lateral longitudinal grooves (20) in the wiper strip (12) and are fixedly connected to each other at the ends thereof by a bridge (24), wherein a wiper blade termination (25) is provided at the end of the wiper blade (10), the base element (26) of which wiper blade termination is guided on the spring rails (22) and is fixed relative to the spring rails (22) and has a pointed-tip holder (40), the pointed tip (66) of which engages in the fitted state in the wiper strip (12) and fixes the wiper strip (12) relative to the spring rails (22), and the cover wall (34) of the base element (26) has a latching opening (28) which latches to the bridge (24) during installation, **characterized in that** the base element has a lateral opening (30) into which the pointed-tip holder (40) can be introduced and locks in the end position on the base element (26), wherein the pointed tip (66) penetrates the wiper strip (12) laterally.

2. Wiper blade (10) according to Claim 1, **characterized in that** the pointed-tip holder (40) has a guide block (46) with lateral guide grooves (48) which match guide webs (50) at the edge of the lateral opening (30).

3. Wiper blade (10) according to Claim 2, **characterized in that** a latch (42) is integrally formed on the guide block (46) in the installation direction, said latch, in the fitted state, latching with a latching edge (44) into a latching notch (38) on the inner side of the cover wall (34).

4. Wiper blade (10) according to either of Claims 2 and 3, **characterized in that** an insertion compartment for a pointed-tip plate (60), the pointed tip (66) of which faces the wiper strip (12), is located on the inner side of the guide block (46) between two guide grooves (58).

5. Wiper blade (10) according to Claim 4, **characterized in that** the base (64) of the pointed-tip plate (60) has a latching element (70) which latches with a corresponding latching element (84) on the pointed-tip holder (40).

6. Wiper blade (10) according to one of Claims 2 to 5, **characterized in that** a press button (54) for releasing the latch (42) is arranged on the guide block (46).

7. Wiper blade (10) according to one of the preceding claims, **characterized in that** a covering cap (74) covers the base element (26) and the pointed-tip holder (40), the covering cap being guided on the base element (26) by guide profiles (78) and having a closed end wall (86) at the end.

8. Wiper blade (10) according to Claim 7, **characterized in that** the approach flow side of the covering cap (74) has a wind-deflecting profile (76) and the open end side of said covering cap has a connection profile (88) for connection to a spoiler.

9. Wiper blade (10) according to Claim 7, **characterized in that** the press button (54) is arranged in the region of maximum elevation of the wind-deflecting profile (76) and is adapted to the inner contour of the covering cap (74).

10. Wiper blade (10) according to one of Claims 7 to 9, **characterized in that** latching elements (82) which interact with latching elements (84) on the base element (26) are provided on the lower limbs (80) of the guide profiles (78).

## Revendications

1. Balai d'essuie-glace (10) comprenant une raclette d'essuie-glace (12) et deux rails élastiques (22) servant d'élément de support, qui sont insérés dans des rainures longitudinales latérales (20) de la raclette d'essuie-glace (12) et qui sont connectés fixement l'un à l'autre à leurs extrémités par un pont (24), une terminaison de balai d'essuie-glace (25) étant prévue à l'extrémité du balai d'essuie-glace (10), dont l'élément de base (26) est guidé sur les rails élastiques (22), est fixé par rapport aux rails élastiques (22) et présente un support à pointe (40), dont la pointe (66) vient en prise dans la raclette d'essuie-glace (12) dans l'état monté et fixe la raclette d'essuie-glace (12) par rapport aux rails élastiques (22), et l'élément de base (26) présentant dans sa paroi de recouvrement (34) une ouverture d'encliquetage (28) qui s'encliquète lors du montage avec le pont (24), **caractérisé en ce que** l'élément de base possède une ouverture latérale (30) dans laquelle le support à pointe (40) peut être introduit et s'encliquète dans la position d'extrémité sur l'élément de base (26), la pointe (66) pénétrant latéralement dans la raclette d'essuie-glace (12).

2. Balai d'essuie-glace (10) selon la revendication 1, **caractérisé en ce que** le support à pointe (40) possède un bloc de guidage (46) avec des rainures de guidage latérales (48), qui s'adaptent à des nervures de guidage (50) sur le bord de l'ouverture latérale (30).

3. Balai d'essuie-glace (10) selon la revendication 2, **caractérisé en ce qu'**un cliquet (42) est formé sur le bloc de guidage (46) dans la direction de montage, lequel cliquet s'encliquète dans l'état monté avec une arête d'encliquetage (44) dans une encoche d'encliquetage (38) sur le côté intérieur de la paroi de recouvrement (34).

4. Balai d'essuie-glace (10) selon l'une quelconque des revendications 2 ou 3, **caractérisé en ce qu'**un compartiment d'enfoncement pour une tôle en pointe (60) se trouve sur le côté intérieur du bloc de guidage (46) entre deux rainures de guidage (58), la pointe (66) de la tôle en pointe étant orientée vers la raclette d'essuie-glace (12).

5. Balai d'essuie-glace (10) selon la revendication 4, **caractérisé en ce que** la tôle en pointe (60) présente dans son fond (64) un élément d'encliquetage (70) qui s'encliquète avec un élément d'encliquetage correspondant (84) sur le support à pointe (40).

6. Balai d'essuie-glace (10) selon l'une quelconque des revendications 2 à 5, **caractérisé en ce qu'**une touche (54) pour desserrer le cliquet (42) est disposée sur le bloc de guidage (46).

7. Balai d'essuie-glace (10) selon l'une quelconque des revendications précédentes, **caractérisé en ce qu'**un chapeau de recouvrement (74) recouvre l'élément de base (26) et le support à pointe (40), lequel chapeau de recouvrement est guidé avec des profilés de guidage (78) sur l'élément de base (26) et possède à une extrémité une paroi frontale fermée (86).

8. Balai d'essuie-glace (10) selon la revendication 7, **caractérisé en ce que** le chapeau de recouvrement (74) possède sur son côté d'afflux un profilé déflecteur d'air (76) et sur son côté frontal ouvert un profilé de raccordement (88) pour le raccordement à un déflecteur.

9. Balai d'essuie-glace (10) selon la revendication 7, **caractérisé en ce que** la touche (54) est disposée dans la région du rehaussement maximum du profilé déflecteur d'air (76) et est adaptée au contour interne du chapeau de recouvrement (74).

10. Balai d'essuie-glace (10) selon l'une quelconque des revendications 7 à 9, **caractérisé en ce que** des éléments d'encliquetage (82) sont prévus sur les branches inférieures (80) des profilés de guidage (78), lesquels coopèrent avec des éléments d'encliquetage (84) sur l'élément de base (26).
